Europäisches Patentamt

European Patent Office

Office européen des brevets

(19)

(11) **EP 1 578 135 A2**

(12) **EUROPEAN PATENT APPLICATION**

(43) Date of publication:
**21.09.2005 Bulletin 2005/38**

(51) Int Cl.$^7$: **H04N 7/26**

(21) Application number: **05005625.8**

(22) Date of filing: **15.03.2005**

| | |
|---|---|
| (84) Designated Contracting States:<br>**AT BE BG CH CY CZ DE DK EE ES FI FR GB GR HU IE IS IT LI LT LU MC NL PL PT RO SE SI SK TR**<br>Designated Extension States:<br>**AL BA HR LV MK YU** | (72) Inventors:<br>• **Lee, Hwa-Soon**<br>  **Yeongtong-gu, Suwon-si, Gyeonggi-do (KR)**<br>• **Lee, Seung-Cheol**<br>  **Yeongtong-gu, Suwon-si, Gyeonggi-do (KR)** |
| (30) Priority: **15.03.2004 KR 2004017453** | (74) Representative: **Lang, Johannes**<br>**Bardehle Pagenberg Dost**<br>**Altenburg Geissler Isenbruck**<br>**Postfach 86 06 20**<br>**81633 München (DE)** |
| (71) Applicant: **SAMSUNG ELECTRONICS CO., LTD.**<br>**Gyeonggi-do (KR)** | |

(54) **Image coding apparatus and method for predicting motion using rotation matching**

(57)    An image coding apparatus and method for increasing the compression rate of a video signal by predicting a motion through rotation matching are provided. In the image coding apparatus for encoding an image signal, a motion predictor calculates MVs by estimating the motion of a previous frame being a reference frame to an input present frame, a rotation and matching unit calculates rotation angles of the present frame by estimating the rotation of the previous frame to the present frame, a rotation recoverer recovers the reference frame according to the rotation angles, a motion compensator reconstructs the rotation-recovered frame using the MVs and outputs a motion-predicted frame, and a coder generates a difference signal between the present frame and the motion-predicted frame and encodes the difference signal, the MVs, and the rotation angles.

FIG.6

Printed by Jouve, 75001 PARIS (FR)

EP 1 578 135 A2

**Description**

**BACKGROUND OF THE INVENTION**

Field of the Invention

The present invention relates generally to image coding. In particular, the present invention relates to an image coding apparatus and method for increasing the compression rate of a video signal by predicting motion using rotation matching.

Description of the Related Art

As is well known, a discretized image signal offers a better still image quality than an analog signal. If a video signal comprising a series of image frames is digitized, a large amount of data must be transmitted to reproduce the image with high quality. Yet, an available band for a transport channel is limited. Thus, transmission of a large amount of data requires a scale-down of the data size through compression.

Among various image compression techniques, probabilistic coding and hybrid coding being a combination of time and space compression schemes are known as the most efficient ones. These techniques are widely disclosed in the Recommendations of Motion Picture Experts Group (MPEG)-1/2/3, H.261/263/264, and Joint Picture Experts Group (JPEG) which were standardized by international standardization institutes.

Most hybrid coding schemes utilize motion-compensated Differential Pulse Code Modulation (DPCM), Discrete Cosine Transform (DCT), DCT coefficient quantization, and Variable Length Coding (VLC). The motion-compensated DPCM detects the motion (difference) of an object between the previous frame and the present frame, predicts the present frame according to the motion, and generates a difference signal representing the difference between the present frame and the estimate. A two-dimensional DCT utilizes or removes the spatial redundancy between video data. It converts digital video data blocks to DCT coefficients. By subjecting the DCT coefficients to quantization, scanning, and VLC, the amount of transmission data is effectively reduced.

Specifically, to eliminate the temporal redundancy between images, the motion-compensated DPCM predicts the present frame from the previous frame based on the estimated motion of the object between the previous frame and the present frame. The estimated motion can be expressed as a two-dimensional motion vector (MV) which represents the displacement between the previous frame and the present frame.

There are several approaches to estimating the displacement of an object. Estimation of the displacement of an object is classified into two types - block-based motion estimation using a block matching algorithm, and pixel-based motion estimation using a pixel recursive algorithm.

In pixel-based motion estimation, an MV representing a displacement is calculated for every pixel. Despite the advantages of more accurate estimation of pixel values and simple scale changing (e.g. zooming), if a large number of MVs are generated, all the MVs cannot be transmitted.

In the block-based motion estimation, a block of a predetermined size in the present frame is compared with corresponding blocks, each being shifted by one pixel from the previous block, in a search block of a predetermined range in the previous frame, and the best-matched block having the smallest error is detected. The result of this operation is a set of displacement vectors of all blocks between the previous frame and the present frame. The similarity between two corresponding blocks in the previous and present frames is determined using Sum of Absolute Differences (SAD) or Sum of Square Differences (SSD).

While many techniques are being studied on calculation of the difference in time between a preceding frame and a present frame for motion prediction in the field of video compression as described above, they are commonly based on the idea that every search block moves vertically and horizontally.

The proliferation of digital cameras capable of photographing still images and moving pictures and portable phones having an in-built mini camera has encouraged not only experts, but ordinary users, to frequently use cameras without camera mounts. Hence, it often occurs that vertical and horizontal pan and tilt of a camera causes image shaking and vibration. In practice, the camera is rotated in any direction in a three-dimensional space, but an image captured by the camera is mapped to a two-dimensional image frame. Therefore, the image shaking and vibration is demonstrated as the rotation of the two-dimensional image frame.

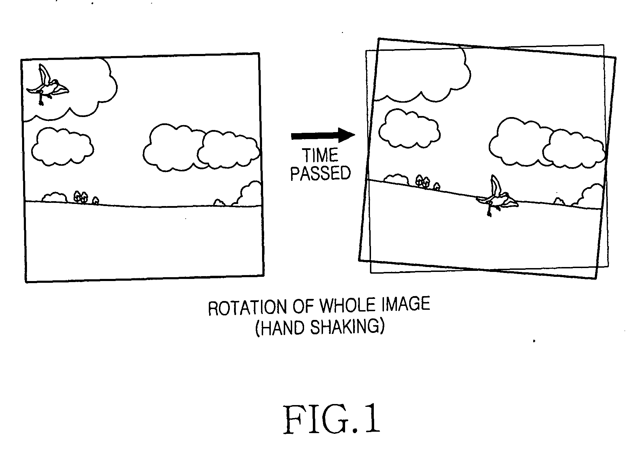

FIG. 1 illustrates an example of rotation of the whole image caused by hand shaking. Referring to FIG. 1, although only one block in the previous frame is actually changed in the present frame, the difference between the previous and present frames becomes great in view of the rotation of the total image caused by hand shaking.

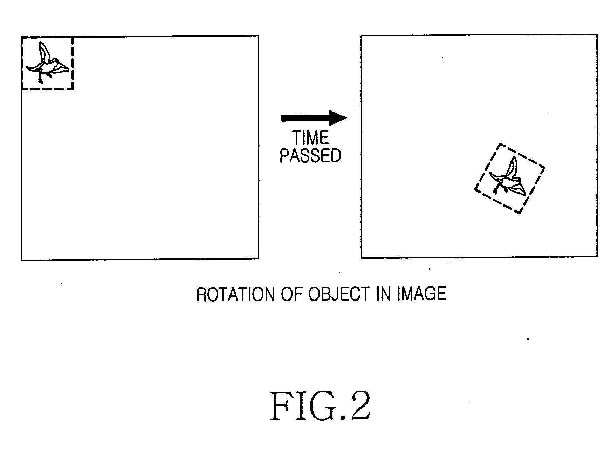

FIG. 2 illustrates another example of image rotation. The whole image is not rotated, but only one object in the previous frame is changed in the present frame. Although the object itself is not changed much, the rotation of the object increases the difference between the previous and present frames. As a particular block rotates, a certain difference always exists between a pre-rotation frame and a post-rotation frame. As the difference becomes large, an image compression rate is decreased.

As described above, the conventional image coding technology, MPEG and H.26x series, does not address two-dimensional rotation of a moving block. Accordingly, even when an object makes no motion, a large motion has been assumed to have occurred, thereby yielding a large MV. Such a large MV increases the image compression rate, causing a decrease in transmission efficiency. Especially in a mobile communication system that transmits image data via a radio interface, the increase in image compression rate significantly reduces the efficiency of radio resources.

**SUMMARY OF THE INVENTION**

An object of the present invention is to substantially solve at least the above problems and to provide at least the advantages below. Accordingly, an object of the present invention is to provide an image coding apparatus and method for predicting motion using rotation matching of an image.

Another object of the present invention is to provide an image coding apparatus and method for increasing the compression rate of image data by providing image rotation information.

The above objects are achieved by providing an image coding apparatus and method for increasing the compression rate of a video signal by predicting motion using rotation matching.

According to one aspect of the present invention, in an image coding apparatus for encoding an image signal, a motion predictor calculates motion vectors (MVs) by estimating the motion of a previous frame comprising a reference frame for an input present frame, a rotation and matching unit calculates rotation angles of the present frame by estimating the rotation of the previous frame compared to the present frame, a rotation recoverer recovers the reference frame according to the rotation angles and outputs a rotation-recovered frame, a motion compensator reconstructs the rotation-recovered frame using the MVs and outputs a motion-predicted frame, and a coder generates a difference signal, indicative of the difference between the present frame and the motion-predicted frame and encodes the difference signal, the MVs, and the rotation angles.

According to another aspect of the present invention, in an image coding method for encoding an image signal, motion vectors (MVs) are calculated by estimating the motion of a previous frame comprising a reference frame for an input present frame, rotation angles of the present frame are calculated by estimating the rotation of the previous frame to the present frame, the reference frame is recovered according to the rotation angles, the resulting rotation-recovered frame is reconstructed using the MVs, a difference signal indicative of the difference between the present frame and the motion-predicted frame is generated, and the difference signal, the MVs, and the rotation angles are encoded.

**BRIEF DESCRIPTION OF THE DRAWINGS**

The above and other objects, features and advantages of the present invention will become more apparent from the following detailed description when taken in conjunction with the accompanying drawings in which:

FIG. 1 illustrates an example of rotation of a whole image due to hand shaking using a conventional image capturing device;
FIG. 2 illustrates another example of image rotation using a conventional image capturing device;
FIG. 3 is a block diagram of a conventional image coding apparatus;
FIGs. 4 and 5 illustrate examples of motion prediction using the motion predictor illustrated in FIG. 3;
FIG. 6 is a block diagram of an image coding apparatus according to an embodiment of the present invention;
FIG. 7 illustrates the relationship between a rotated block and an expanded block according to an embodiment of the present invention;
FIG. 8 is a flowchart illustrating a motion compensation operation according to an embodiment of the present invention;
FIG. 9 is a flowchart illustrating a rotation and matching operation according to an embodiment of the present invention; and
FIG. 10 is a flowchart illustrating an image coding operation according to an embodiment of the present invention.

**DETAILED DESCRIPTION OF THE PREFERRED EMBODIMENT**

An embodiment of the present invention will now be described herein below with reference to the accompanying drawings. In the following description, well-known functions or constructions are not described in detail since they would obscure the invention in unnecessary detail.

The embodiment of the present invention minimizes a rotation-caused difference between a block in a present frame and a reference block in a reference frame by rotating the reference block and comparing the present frame block with the rotated reference blocks, while detecting a best-matched block for the block of the present frame, for motion prediction to detect the difference between images.

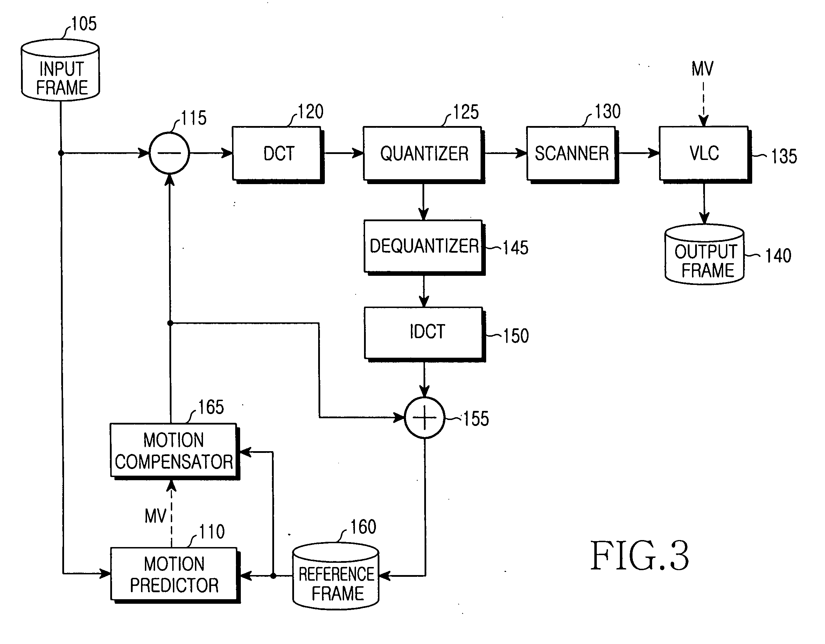

FIG. 3 is a block diagram of a conventional image coding apparatus. Referring to FIG. 3, input data of a present frame is buffered in an input buffer 105. The present frame data is image information constructed in a frame. It comprises as many pixel values as the number of pixels per frame. The input buffer 105 provides the present frame to a subtractor 115 and a motion predictor 110.

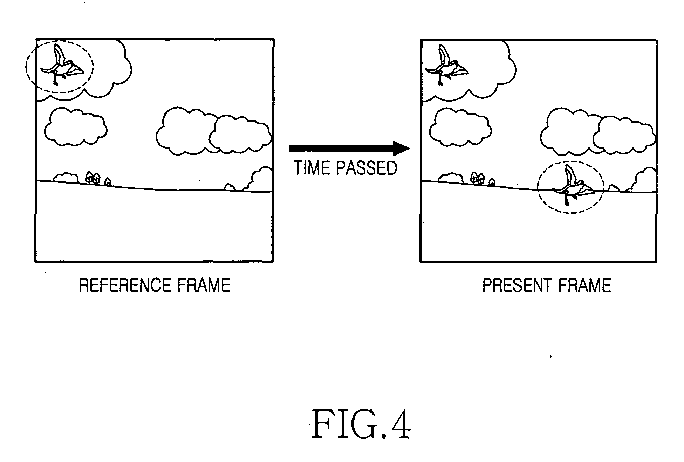

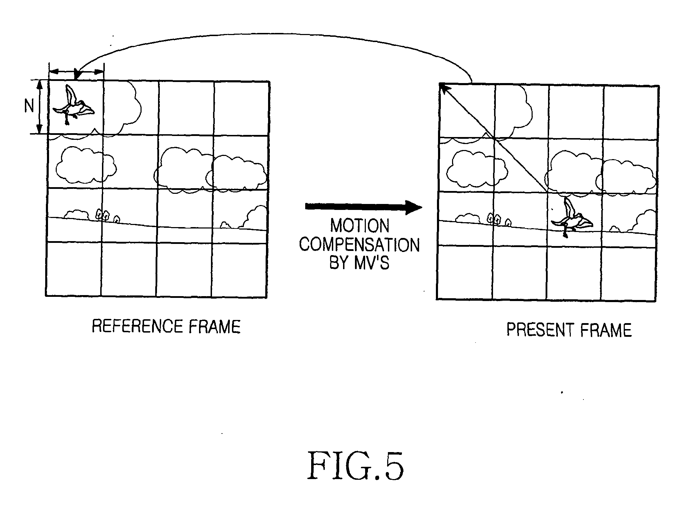

The motion predictor 110 calculates motion vectors (MVs) indicating the displacements of the blocks of a present frame to their corresponding blocks in a reference frame. The reference frame is a reconstructed previous frame buffered in a reference buffer 160. The principle of the motion prediction will be described later with reference to FIGs. 4 and 5. A motion compensator 165 reconstructs a motion-compensated present frame by compensating for the blocks of the reference frame buffered in the reference buffer 160 according to the MVs and provides the motion-compensated present frame to the subtractor 115.

The operation of the motion predictor 110 will now be described in more detail. The motion predictor 110 segments the present frame into square blocks of size N (for example, N=16 pixels), searches the reference frame for each of the blocks, and detects the best-matched blocks for the blocks of the present frame. Because searching of the whole reference frame requires too much computation, the reference frame is searched through a search window of the same size that moves one or a half pixel, side by side and up and down from the position of a corresponding block of the present frame in the reference frame. Many search schemes are available for the reference frame search, such as full search, diamond search, three step search, etc. Yet, they are well known and beyond the scope of the present invention. Thus, their description is not provided here.

When a corresponding block in the reference frame is searched for a block of the present frame, the motion predictor 110 measures the similarity between the two blocks by matching them. The similarity can be measured by known computation formulas. Herein, Sum of Absolute Differences (SAD) is used. The SAD is computed by the following equation:

$$SAD = \sum_i \sqrt{(A_i - B_i)^2}$$

$$\ldots\ldots (1)$$

where $A_i$ is an $i^{th}$ pixel value of the block of the present frame and $B_i$ is an $i^{th}$ pixel value of the block of the reference frame.

The motion predictor 110 detects a block of the reference frame having a minimum SAD with respect to the block of the present frame and yields the MV of the block of the present frame to the detected block of the reference frame.

FIGs. 4 and 5 illustrate examples of motion prediction in the motion predictor 110. FIG. 4 illustrates a present frame received one frame duration after a reference frame. As illustrated in FIG. 4, the present frame is identical to the reference frame except for the motion of one object. A block at coordinates (1, 1) is detected in the reference frame for a block at coordinates (3, 3) in the present frame, as illustrated in FIG. 5. The MV of the (3, 3) block in the present frame to the (1, 1) block in the reference frame is (-2, 2).

The subtractor 115 subtracts each motion-compensated block received from the motion compensator 165 from a corresponding block of the present frame and generates a difference signal including the resulting difference pixel. A discrete cosine transformer (DCT) 120 transforms the spatial-domain difference signal to a set of DCT coefficients representing a frequency band. A quantizer 125 quantizes the DCT coefficients using a predetermined quantization step size. The purpose of the quantization is to render remaining non-zero small DCT coefficients to zeroes and reduce the variance of the quantized coefficients below that of the original DCT coefficients, for efficient coding. A scanner 130 rearranges the quantized DCT coefficients in order from two dimension to one dimension and from low frequency to high frequency.

A variable length coder (VLC) 135 variable-length-encodes the data received from the scanner 130 along with predetermined control information and provides an output buffer 140 with an output frame of a compressed size relative to the present frame. The variable length coding refers to entropy coding in which a short code is assigned to a value having a high occurring probability and a long code is assigned to a value having a low occurring probability. The control information includes the MVs of the blocks of the present frame from their corresponding blocks of the previous frame.

Meanwhile, a dequantizer 145 dequantizes the quantized data into the DCT coefficients. An inverse DCT (IDCT) 150 transforms the DCT coefficients to a spatial-domain difference signal. A combiner 155 combines the motion-compensated present frame received from the motion compensator 165 with the difference signal received from the IDCT 150 and stores the resulting frame as a reference frame for the next frame in the reference buffer 160.

As described before, the motion predictor 110 detects a corresponding block, moving the search window up and down, and left and right in the reference frame. Therefore, the input image is shaken or loss of a compression rate arises from the rotational motion of an object in the image. According to the embodiment of the present invention, to solve the problem, a rotation angle having the smallest difference between the corresponding reference block and the present frame block is detected, while rotating the reference block determined by the motion predictor 110 each time at a predetermined angle. Only the difference between the rotated reference block and the present frame block is compressed, thereby preventing the image rotation-incurred compression rate loss.

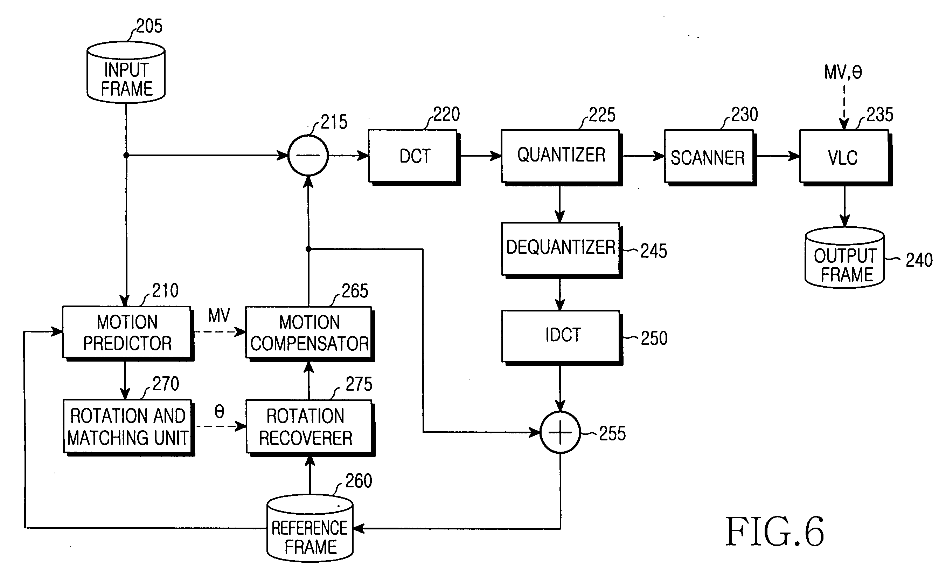

FIG. 6 is a block diagram of an image coding apparatus according to an embodiment of the present invention. A comparison between FIG. 3 and FIG. 6 reveals that a rotation and matching unit 270 and a rotation recoverer 275 are further included in the image coding apparatus of FIG. 6. The components not related to the subject matter of the present invention, a subtractor 215 through a VLC 235 will be collectively called a coder, distinguishably from the image coding apparatus including all the components illustrated in FIG. 6.

Referring to FIG. 6, input data of a present frame is buffered in an input buffer 205. The present frame data is image information constructed in a frame. It comprises as many pixel values as the number of pixels per frame. The input buffer 205 provides the present frame to the subtractor 215 and a motion predictor 210.

The motion predictor 210 calculates MVs indicating the displacements of the blocks of the present frame to their corresponding blocks in a reference frame. The reference frame is a reconstructed previous frame buffered in a reference buffer 260. A motion compensator 265 reconstructs a motion-compensated present frame by compensating for the blocks of the reference frame buffered in the reference buffer 260 according to the MVs and provides the motion-compensated present frame to the subtractor 215.

The motion predictor 210 segments the present frame into square blocks of size N (for example, N=16 pixels), searches the reference frame for each of the blocks, and detects the best-matched blocks for the blocks of the present frame. The motion predictor 210 then determines the MVs of the block of the present frame to the corresponding reference blocks of the reference frame.

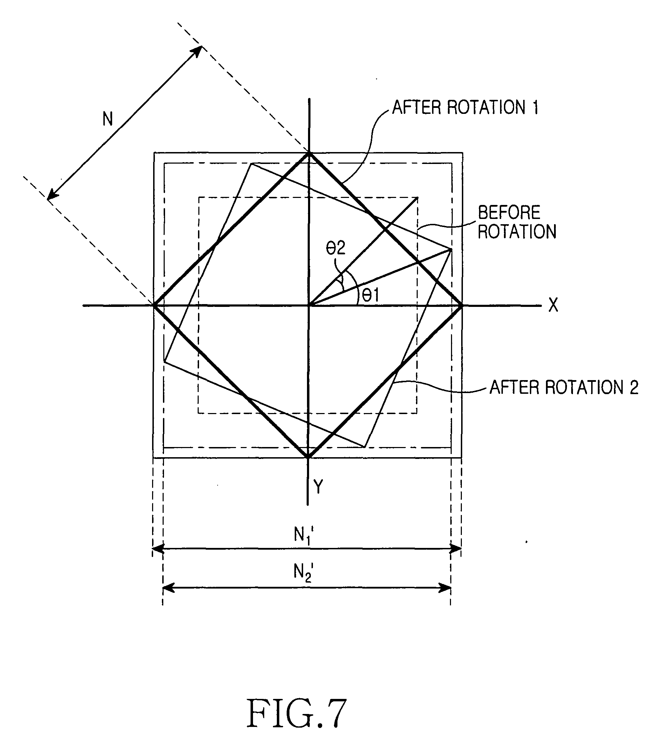

The rotation and matching unit 270 detects rotation angles at which reference blocks are most similar to the corresponding blocks of the present frame, while rotating the reference blocks each time at a predetermined angle. A rotated block is part of an expanded block created by rotating a reference block. FIG. 7 illustrates the relationship between the rotated block and the expanded block. If the reference block is NxN in size, the expanded block has a size of N'xN' covering rotated versions of the reference block. N' is computed using the following equation:

$$N = \sqrt{2}N\sin(\frac{x}{4} + \theta) \tag{2}$$

where N is the horizontal and vertical length of the reference block and $\theta$ is the rotation angle of the rotated block.

The pixels of the expanded block are calculated using the following equation:

$$x' = x\cos(\theta) + y\sin(\theta)$$

$$y' = -x\sin g(\theta) + y\cos(\theta) \tag{3}$$

where (x, y) is the coordinates of a pixel in the reference block and (x', y') is the coordinates of a pixel in the expanded block.

Since new pixel values resulting from rotation are real numbers, they are converted to discrete image data by interpolation. If the reference block is at an edge of the reference frame, pixels outside the reference frame are zeroes. A rotated reference block is a block clipped to a size of NxN from the center of the expanded block. That is, the rotation and matching unit 270 increases or decreases the rotation angle of the reference block by $\pi/180$ each time within a range between $-\pi/4$ and $\pi/4$, calculating the SAD of a block rotated by the rotation angle and the present block, and detects the rotation angle of a rotated block whose SAD is less than that of the pre-rotation reference block, with respect to the present block.

The rotation recoverer 275 recovers the blocks of the reference frame stored in the reference buffer 260 according to the rotation angles detected by the rotation and matching unit 270. The motion compensator 265 reconstructs a motion-compensated present frame by compensating for the rotation-recovered blocks of the reference frame according to the MVs calculated by the motion predictor 210 and provides the motion-compensated present frame to the subtractor 215.

The subtractor 215 subtracts the motion-compensated blocks received from the motion compensator 265 from the blocks of the present frame and generates the resulting difference signal including difference pixel values. A DCT 220 transforms the spatial-domain difference signal to a set of DCT coefficients representing a frequency band. A quantizer 225 quantizes the DCT coefficients using a predetermined quantization step size. A scanner 230 rearranges the quantized DCT coefficients in order from two dimension to one dimension and from low frequency to high frequency.

The VLC 235 variable-length-encodes the data received from the scanner 230 along with predetermined control information and provides an output buffer 240 with an output frame of a compressed size relative to the present frame. The control information includes the MVs and rotation angles of the blocks of the present frame from their corresponding blocks of the previous frame.

Meanwhile, a dequantizer 245 dequantizes the quantized data into the DCT coefficients. An IDCT 250 transforms the DCT coefficients to a spatial-domain difference signal. A combiner 255 combines the motion-compensated present frame received from the motion compensator 265 with the difference signal received from the IDCT 250 and stores the resulting frame as a reference frame for motion prediction and motion compensation for the next frame in the reference buffer 260.

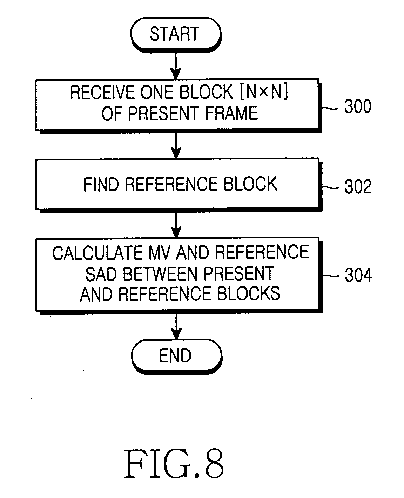

The image coding operation according to the embodiment of the present invention will now be described in more detail with reference to FIGs. 8, 9 and 10. It is to be noted that the following description is made of the image coding operation on only one block of a present frame but the operation is performed on every block of the present frame.

FIG. 8 is a flowchart illustrating the operation of the motion predictor 210 according to an embodiment of the present invention.

Referring to FIG. 8, the motion predictor 210 receives one NxN block of the present frame in step 300. The input block is referred to as a present block. In step 302, the motion predictor 210 searches for a block most similar to the present block, that is, a block having a minimum SAD with respect to the present block in a reference frame. This block is referred to as a reference block. The motion predictor 210 outputs the MV of the present block to the reference block and the SAD between the reference and present blocks in step 304. The SAD is considered a reference SAD.

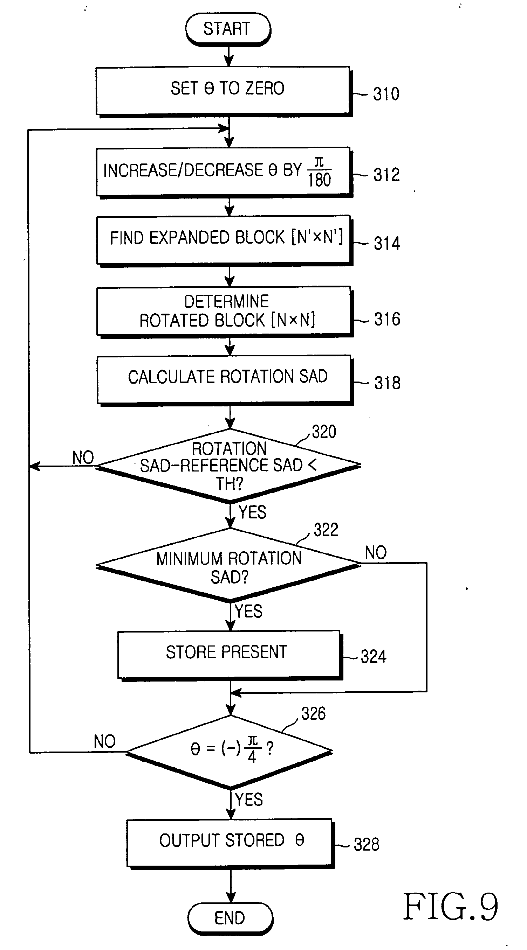

FIG. 9 is a flowchart illustrating the operation of the rotation and matching unit 270 according to the embodiment of the present invention. While both cases of increasing and decreasing a rotation angle θ from 0 are depicted in the same procedure, they are separately performed in practice.

Referring to FIG. 9, the rotation and matching unit 270 receives the present block and its reference block from the motion predictor 210 and the rotation angle is set to 0 in step 310. In step 312, θ is increased (or decreased) by $\pi/180$. An expanded block of size N'xN' including the reference block rotated at the rotation angle is determined in step 314. The rotation and matching unit 270 creates a rotated block at the center of the expanded block by clipping the expanded block to NxN from its center in step 316.

In step 318, the rotation and matching unit 270 calculates a new SAD, that is, a rotation SAD by comparing the pixels of the rotated block with those of the present block. The rotation SAD is compared with the reference SAD received from the motion predictor 310 in step 320. If the difference of subtracting the reference SAD from a rotation SAD is less than a threshold TH, the rotation and matching unit 270 proceeds to step 322. If the difference is equal to or greater than TH, the rotation and matching unit 270 proceeds to step 326. Preferably, TH is equal to or greater than 0,10% or less of the reference SAD.

In step 322, the rotation and matching unit 270 determines whether the rotation SAD is the smallest of rotation SADs yielded from previous rotation angles. If it is, the rotation and matching unit 270 stores the present rotation angle in step 324 and determines whether the present rotation angel θ is $\pi/4$ ($-\pi/4$ in the case of an angle decrease) in step 326. If θ is not $\pi/4$, the rotation and matching unit 270 returns to step 312. If θ is $\pi/4$, the rotation and matching unit 270 proceeds to step 328 (after the operation of decreasing the rotation angle if the angle decrease operation has not yet been performed). In step 328, the rotation and matching unit 270 outputs the stored rotation angle. If the difference of subtracting the reference SAD from every rotation SAD is equal to or greater than TH, the output rotation angle is 0.

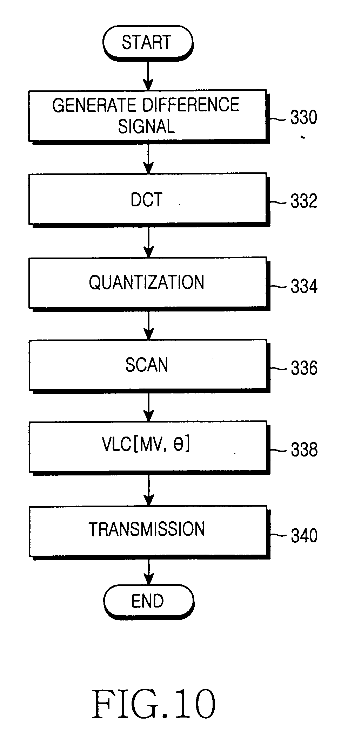

FIG. 10 is a flowchart illustrating an image coding operation according to the embodiment of the present invention. The image coding operation occurs in the coder including the subtractor 215 through the VLC 235 illustrated in FIG. 6.

Referring to FIG. 10, the subtractor 215 generates a difference signal between each block of a present frame and a corresponding block of a motion-predicted and rotation-recovered frame in step 330. The DCT 220 transforms the difference signal to DCT coefficients in step 332 and the equalizer 225 quantizes the DCT coefficients in step 334. The scanner 230 rearranges the quantized DCT coefficients in step 336 and the VLC 235 generates an output frame by encoding the data received from the scanner 230, together with MVs determined in the operation illustrated in FIG. 7, and rotation angles determined in the operation illustrated in FIG. 9 in step 338. In step 340, the output frame is transmitted after predetermined processing.

The significant advantages of the embodiment of the present invention described above are as follows.

The embodiment of the present invention prevents a decrease in a compression rate caused by rotation of an input image, thereby improving transmission efficiency. Especially, the embodiment of the present invention effectively prevents the increase of the number of bits which is the problem encountered due to hand shaking-caused image instability.

While the invention has been shown and described with reference to a certain embodiment thereof, it should be understood by those skilled in the art that various changes in form and details may be made therein without departing from the spirit and scope of the invention as defined by the appended claims.

**Claims**

1. An image coding apparatus for encoding an image signal, comprising:

   a motion predictor for calculating motion vectors (MVs) by estimating the motion of a previous frame comprising a reference frame about an input present frame;
   a rotation and matching unit for detecting rotation angles of the present frame by estimating the rotation of the previous frame compared to the present frame;
   a rotation recoverer for recovering the reference frame according to the rotation angles and outputting a rotation-recovered frame;
   a motion compensator for reconstructing the rotation-recovered frame using the MVs and outputting a motion-predicted frame; and
   a coder for encoding a difference signal, indicative of a difference between the present frame and the motion-predicted frame, the MVs, and the rotation angles and outputting an output frame.

2. The image coding apparatus of claim 1, wherein the rotation and matching unit determines a rotation angle at which each present block of the present frame is least different from a reference block corresponding to the present block in the reference frame, while rotating the reference block at a predetermined unit angle.

3. The image coding apparatus of claim 1, wherein the motion predictor calculates an MV of each present block of the present frame, the MV representing the displacement of the present block of the present frame to a reference block of the reference frame corresponding to the present block, and generates the difference between the present block and the reference block as a reference difference.

4. The image coding apparatus of claim 3, wherein the difference is the sum of the differences between the pixels of the present block and the pixels of the reference block.

5. The image coding apparatus of claim 3, wherein the rotation and matching unit, while rotating the reference block at rotation angles, each rotation angle being changed from the previous rotation angle by a predetermined unit angle, and determining an expanded block including the rotated reference blocks, compares the reference difference with the differences between the rotated reference blocks and the present block, and outputting a rotation angle of the reference block at which the difference of subtracting the reference difference from the difference between the reference block and the present block is less than a predetermined threshold.

6. The image coding apparatus of claim 5, wherein the threshold is equal to or larger than zero, and less than or equal to 10% of the reference difference.

7. The image coding apparatus of claim 1, wherein the coder comprises:

   a subtractor for generating a difference signal between the present frame and the rotation-recovered frame;
   a discrete cosine transformer (DCT) for DCT-processing the difference signal to DCT coefficients;
   a quantizer for quantizing the DCT coefficients;
   a scanner for rearranging the quantized DCT coefficients;
   a variable-length coder for variable-length-encoding the rearranged DCT coefficients together with the MVs and the rotation angles;
   a dequantizer for dequantizing the quantized DCT coefficients;
   an inverse DCT (IDCT) for IDCT-processing the dequantized DCT coefficients; and
   a combiner for combining the output of the IDCT with the motion-compensated frame and storing the combined frame as a new reference frame.

8. An image coding method for encoding an image signal, comprising the steps of:

calculating motion vectors (MVs) by estimating the motion of a previous frame comprising a reference frame for an input present frame;

detecting rotation angles of the present frame by estimating the rotation of the previous frame compared to the present frame;

recovering the reference frame according to the rotation angles and outputting a rotation-recovered frame;

reconstructing the rotation-recovered frame using the MVs and outputting a motion-predicted frame; and

encodinga difference signal indicative of a difference between the present frame and the motion-predicted frame, the MVs, and the rotation angles, and outputting an output frame.

**9.** The image coding method of claim 8, wherein the rotation angle calculation step comprises the step of determining a rotation angle at which each present block of the present frame is least different from a reference block corresponding to the present block in the reference frame, while rotating the reference block at a predetermined unit angle.

**10.** The image coding method of claim 8, wherein the MV calculation step comprises the step of calculating an MV of each present block of the present frame, the MV representing the displacement of the present block of the present frame to a reference block of the reference frame corresponding to the present block, and generates the difference between the present block and the reference block as a reference difference.

**11.** The image coding method of claim 10, wherein the difference is the sum of absolute differences (SAD) between the pixels of the present block and the pixels of the reference block.

**12.** The image coding method of claim 10, wherein the rotation angle calculation step comprises the steps of:

rotating the reference block at rotation angles, each rotation angle being changed from the previous rotation angle by a predetermined unit angle, and determining an expanded block including the rotated reference blocks;

generating rotated blocks by clipping the expanded block to the size of the present block;

calculating the differences between the rotated blocks and the present block; and

outputting the rotation angle of a rotated block having a minimum difference among rotated blocks having differences less than the reference difference by a predetermined threshold or more.

**13.** The image coding method of claim 12, wherein the threshold is equal to or larger than zero, and less than or equal to 10% of the reference difference.

**14.** The image coding method of claim 12, wherein the predetermined unit angle is $\pi/180$.

**15.** The image coding method of claim 12, wherein the rotation angles increase or decrease within a range between $-\pi/4$ and $\pi/4$.

**16.** The image coding method of claim 12, wherein the expanded block is $\sqrt{2}N \sin(\frac{\pi}{4} + \theta)$ wide and $\sqrt{2}N \sin(\frac{\pi}{4} + \theta)$ long, N being the width and length of the present block and reference block and $\theta$ being the rotation angle of the expanded block.

**17.** The image coding method of claim 12, wherein the coordinates (x', y') of each pixel of the expanded block is calculated by

$$x' = x\cos(\theta) + y\sin(\theta)$$

$$y' = - x\sin g(\theta) + y\cos(\theta)$$

where $\theta$ is the rotation angle of the expanded block.

**18.** The image coding method of claim 8, wherein the coding step comprises the steps of:

generating a difference signal between the present frame and the rotation-recovered frame;

discrete-cosine-transforming the difference signal to discrete cosine transform (DCT) coefficients;

quantizing the DCT coefficients;

rearranging the quantized DCT coefficients;

variable-length-encoding the rearranged DCT coefficients together with the MVs and the rotation angle;

dequantizing the quantized DCT coefficients;

inverse-discrete-cosine-transforming the dequantized DCT coefficients; and

combining the output of the IDCT with the motion-compensated frame and storing the combined frame as a new reference frame.

TIME
PASSED

ROTATION OF WHOLE IMAGE
(HAND SHAKING)

FIG.1

TIME
PASSED

ROTATION OF OBJECT IN IMAGE

# FIG.2

FIG.3

EP 1 578 135 A2

REFERENCE FRAME    TIME PASSED    PRESENT FRAME

FIG.4

REFERENCE FRAME

MOTION
COMPENSATION
BY MV'S

PRESENT FRAME

FIG.5

FIG.6

EP 1 578 135 A2

FIG.7

START

RECEIVE ONE BLOCK [N×N]
OF PRESENT FRAME — 300

FIND REFERENCE BLOCK — 302

CALCULATE MV AND REFERENCE
SAD BETWEEN PRESENT
AND REFERENCE BLOCKS — 304

END

FIG.8

START

SET θ TO ZERO — 310

INCREASE/DECREASE θ BY $\frac{\pi}{180}$ — 312

FIND EXPANDED BLOCK [N'×N'] — 314

DETERMINE
ROTATED BLOCK [N×N] — 316

CALCULATE ROTATION SAD — 318

320
ROTATION
SAD–REFERENCE SAD <
TH?
NO ← / YES ↓

322
MINIMUM ROTATION
SAD?
NO → / YES ↓

STORE PRESENT — 324

326
$\theta = (-)\frac{\pi}{4}$ ?
NO ← / YES ↓

OUTPUT STORED θ — 328

END

FIG.9

START

GENERATE DIFFERENCE
SIGNAL — 330

DCT — 332

QUANTIZATION — 334

SCAN — 336

VLC[MV, θ] — 338

TRANSMISSION — 340

END

FIG.10